Europäisches Patentamt

European Patent Office

Office européen des brevets

(11) Publication number: **0 198 004**
**B1**

# EUROPEAN PATENT SPECIFICATION

(45) Date of publication of patent specification: **27.12.89**

(51) Int. Cl.⁴: **B 65 D 25/42**

(21) Application number: **85905116.1**

(22) Date of filing: **15.10.85**

(86) International application number:
**PCT/NO85/00065**

(87) International publication number:
**WO 86/02334 24.04.86 Gazette 86/09**

(54) CONTAINER HAVING IMPROVED POURING PROPERTIES.

(30) Priority: **15.10.84 NO 844114**
**15.03.85 NO 851026**

(43) Date of publication of application:
**22.10.86 Bulletin 86/43**

(45) Publication of the grant of the patent:
**27.12.89 Bulletin 89/52**

(84) Designated Contracting States:
**BE DE FR GB NL SE**

(56) References cited:
**DE-C-2 026 922**
**GB-A-1 329 471**
**GB-A-2 098 572**
**NO-B- 120 506**
**US-A-3 844 456**

(73) Proprietor: **MELLERUD PLASTEMBALLAGE AB**
**Industrigatan 2**
**S-464 01 Mellerud (SE)**

(72) Inventor: **SAMUELSEN, Terje**
**Markveien 17**
**N-1500 Moss (NO)**

(74) Representative: **Weston, Robert Dale et al**
**c/o PHILLIPS & LEIGH 7 Staple Inn**
**Holborn London WC1V 7QF (GB)**

Courier Press, Leamington Spa, England.

## Description

The present invention relates to liquid containers having improved pouring properties.

When a container containing a liquid that may be more or less viscous is to be emptied, air will enter into the container at the same time as the liquid is discharged. Such a replacement of liquid by air will often cause the pouring liquid to pulsate, resulting in the liquid flow not landing where it was originally meant to land.

In order to avoid such a pulsating discharge from a container document GB—A—2098572 discloses providing a duct in the pouring aperture, said duct extending from within the pouring spout that extends upwards from the container portion, and extending some distance along the upper portion of the container. Such a duct is, however, disadvantageous when the container is to be filled as it reduces the spout aperture and prevents entry of a filling nozzle into the container. Furthermore, such a duct will be unsuitable for screw caps or the like based on cone tightening, i.e. a groove shaped portion inside the cap closing about the upoper rim of the pouring spout.

It is an object of the present invention to provide a liquid container with an air flow duct that does not prevent entry of a filling nozzle into the container.

According to the present invention a container for liquids has a pouring spout and a venting duct extending from the spout to the interior of the container, the duct having a lip close to the base of the spout opening to reduce the discharge area of the spout and leave a reduced area of the duct lip open to permit inflow of air through the duct into the container wherein the duct lip is perpendicular to the axis of the spout and is positioned at or below the base of the spout, thereby to permit insertion of a filling nozzle through the spout into the container.

It should be understood that a container according to the present invention may comprise not only one duct, which is suitable when the container has a shape designed for pouring in one direction, but may comprise several ducts, especially in connection with containers not being designed to be poured in a special direction.

There are, however, several geometric conditions playing a part in achieving optimal pouring properties of containers as mentioned above, and these geometric conditions, as well as the manner of adapting them to the viscosity of the liquid, are the basis of a further development of the present container.

In fact, it was found that it is not only important that the discharge area and the cross sectional area of the pouring spout are optimally adapted but, also, that a correct angle of the pouring spout in relation to a vertical plane through the container is selected.

This pouring spout angle is of great importance, not only in connection with said relationship between discharging area and cross sectional area but, also, in connection with the height of said pouring spout; and increased height or length of the pouring spout necessitating compensation by a larger angle of the pouring spout, that is a larger angle with the portion of the container opposite to its handle or holding side. In this manner it is possible to avoid that a possibly high pouring spout causes the liquid level to cover both the liquid discharge area and the channel portion for air entering the container, which means that the entire outlet might be filled with liquid if discharging occurs very rapidly. This would, in turn cause the air channel to be blocked with initial discharging, and the necessary air inlet effect would, thus, not be achieved.

Furthermore, the positioning of the pouring spout will effect the pouring properties of the container, and the positioning of the spout will at the same time, effect the level of liquid possible in the filled container.

If the pouring spout is displaced towards the handle side, the pouring spout may have a more acute angle in relation to the vertical plane, but this angle, in turn, is dependent on the height of the pouring spout as well as on other geometric conditions of the discharging area relative to this area of the channel portion.

Additionally, the geometric conditions of the container and this pouring spout are dependent on the viscosity or density of the liquid, a liquid of greater viscosity tending more to block the opening of the pouring spout before it flows over the outer rim of the pouring spout. In other words, a liquid of greater density tends more to provide a so called flood wave effect when discharging is started abruptly with a full container. For viscous liquids it is, thus, important to have a free pouring opening that is as large as possible. At the same time the positioning of the pouring spout and its angle as well as its height, and the filling level of the container must be mutually adapted for a best possible result to be achieved.

The invention will be disclosed in more detail in the following with reference to the drawing.

Figure 1 is a partial side elevation of a container designed in accordance with the teachings of the present invention.

Figure 2 is a partial plan view of the container in the pouring spout area.

Figure 3 is a sectional view along line III—III in Figure 1.

Figure 4 is an elevation like Figure 1 showing the container in a pouring position.

Figures 5—7 are diagrammatic side elevations of an alternative embodiment of a container shown in various pouring positions and having the pouring spout positioned closer to the center of the container.

Figures 8 and 9 are diagrammatic side elevations of a further embodiment of a container having its pouring spout positioned still closer to the handle.

Figures 10 and 11 are diagrammatical side elevations of still another embodiment where the pouring spout is positioned on the opposite side of the handle and where the pouring spout is given alternative angles.

Figure 12 is a diagrammatic side elevation like Figure 1, where the free discharging area is made larger.

Figure 13 is a diagrammatic side elevation like Figure 11 showing an alternative pouring spout having a larger discharge angle, but a moderate free discharge area.

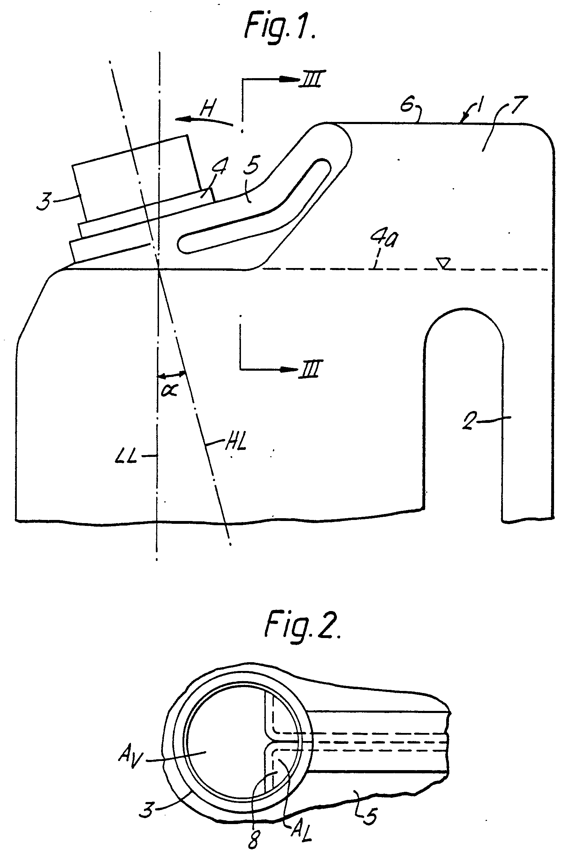

In Figure 1 a side elevation of a container is shown, which container is generally designated 1 and may be manufactured from a plastic material, e.g. a synthetic resin.

Container 1 is shaped so as to make it natural to discharge its content in one definite direction, said container being provided with a handle 2 on one side, whereas it is provided with a pouring spout 3 on the other side. The natural discharge direction will, thus, be with the pouring spout 3 inclined in the direction of arrow H when the user holds the handle 2.

Container 1 may be filled with a more or less viscous liquid, e.g. white spirit, oil, juice, fizzy lemonade, etc. and it may e.g. be filled to level 4a before any pouring takes place.

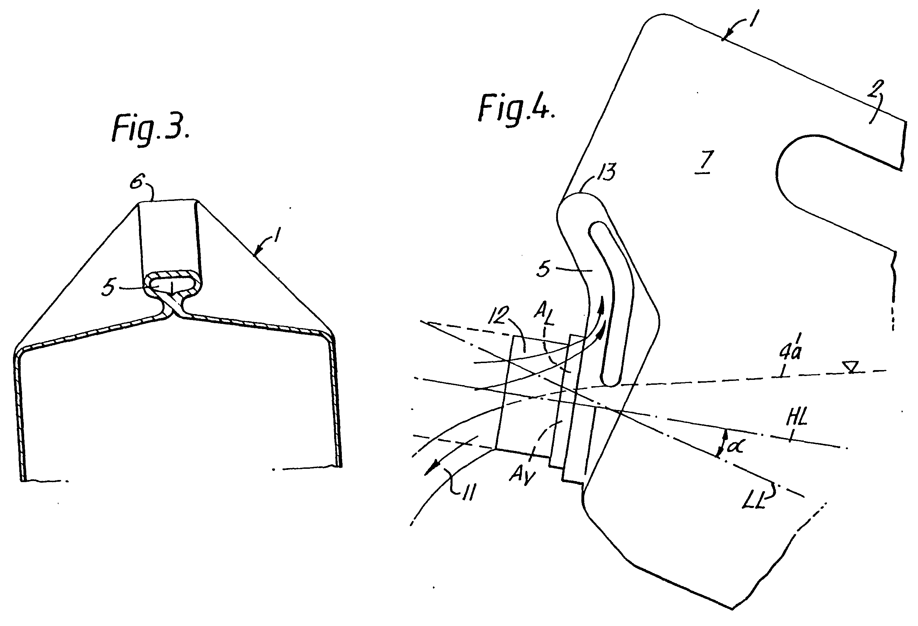

In the area of the pouring spout 3 of the container, preferably at or closely beneath the base 4 of the pouring spout a duct or channel portion 5 is provided, as will appear from Figures 2 and 4 as well. Said channel portion 5 extends from the base of pouring spout 3 in a direction opposed to the discharge direction H, i.e. upwards toward the upper portion 6 of the container where it opens into space 7 which is not filled with liquid in the shown embodiment of container 1.

As most clearly appearing from Figure 2, channel portion 5 will have a lip portion 8 reducing the free discharge area of the pouring spout in the area of the base 4 of pouring spout 3. In other words, the liquid to be discharged from container 1 will only pass through pouring spout 3 through the area designated AV in Figure 2, whereas area AL covered by lip portion 8 of the channel portion 5 will be available for air flowing into the container when said container is in a pouring position.

In Figure 4, which is an elevational view like Figure 1, it is disclosed how discharging liquid 11 will only pass through area AV, whereas are AL is at disposal for air flowing in through pouring spout 3 and advancing through channel portion 5 to its upper end 13 where the air flows into the space 7 above the level 4a' of liquid.

With continued pouring the pouring position of container 1 will change, implying that the level 4d of liquid will change height as well as inclination, but all the time the liquid flow from the container will be limited to area AV without interfering with the inward flow of air through area AL and channel portion 5.

Such emptying of the container 1 means that the air may flow freely into the container and there will be no suction effect that might interfere with a uniform discharge jet from the container.

It should be understood that channel portion 5 may suitably be provided during the manufacturing of container 1 as an integral portion of the container, as said container 1 may be manufactured from a material permitting shaping, moulding, compression moulding, or the like, e.g. from plastic. It should, however, also be understood that other materials may be considered as well, e.g. glass, metal, cardboard or a mixture of these materials.

Moreover, it is not excluded that the channel portion may be provided after the container has been produced, possibly in the form of an added portion or as a part that is welded or otherwise joined with the container.

In the shown embodiment of a container 1 said container is shaped for pouring in a definite direction. In this case one channel portion extending from the outlet area of pouring spout 3 in the opposite direction of pouring direction H should be sufficient.

The invention may, however, also be used in connection with containers with a shape for pouring in an arbitrary direction. Such containers may be provided with several channel portions, preferably being uniformly distributed about the pouring spout area and each of them contributing to a reduction of the free discharging area of the pouring spout in the area of its opening portion, however, at the reduced area leaving the channel portion in question open for air flowing into the container in the space emptied of its content.

In the shown embodiment lip portion 8 of channel portion 5 is arranged so far down in pouring spout 3, or spout 3 extends so far above rim portion 8 respectively, that there is no interference or prevention of inserting a filling nozzle.

Due to the fact that the channel portions may be provided integrally with the container, such a method of manufacture will imply few alterations of the production tools that are already in use for known containers. It should be understood, however, that the method according to the invention might also be used with existing containers of a suitable material, since a channel portion as disclosed above may be provided by shaping the container material in the area of the pouring spout. Such subsequent shaping will, especially, be considered in connection with reusable containers.

In Figures 1 and 4 two lines have been drawn, a first line LL which is the vertical line, i.e. a vertical line through the container in a standing position as shown in Figure 1, and a second line, i.e. the pouring spout line HL which is a line along the axis of pouring spout 3.

Between vertical line LL and pouring spout line HL there is an angle a indicating the inclination of pouring spout 3 relative vertical line LL.

This angle a is of great importance in constructing a pouring spout providing the desired properties of the container according to the present invention, i.e. prevention of a pulsating discharge of the content of a container when said container is emptied, as disclosed above.

In the following further embodiments of cans according to the invention will be disclosed, said cans being provided with various pouring spouts as regards the positioning of the spout, its inclination and height as well as regarding the ratio of the free discharge area and the opening of the pouring spout.

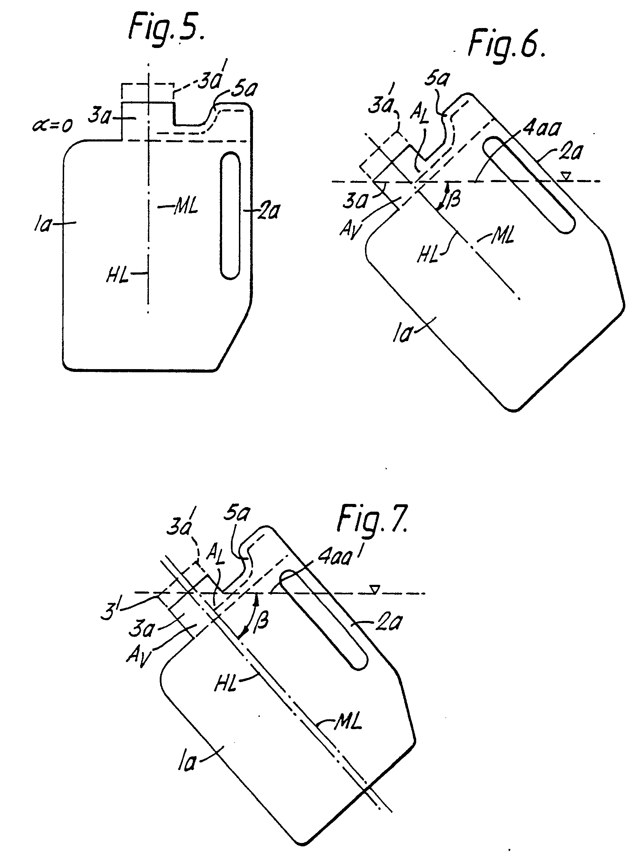

In Figures 5, 6 and 7 diagrammatic side elevations are shown of an alternative embodiment of a container, here designated 1a and shown in various pouring positions. Pouring spout 3a is, in this case, positioned closer to center line ML and the handle 2a of the container as compared with the embodiment shown in Figures 1, 2 and 4.

In Figures 5, 6 and 7 the pouring spout axis HL is shown and in this embodiment pouring spout axis HL forms and angle α = 0, i.e. pouring spout 3a stands vertically on top of the container.

In Figures 5, 6 and 7 a dot-and-dash extension of pouring spout 3a is also shown and designated 3a', and in Figures 5 and 6 the influence of such an extension on the outlet conditions is shown.

In Figures 5—7, furthermore, 5a designates the channel portion 5a formed in the upper part of the container and extending into the opening portion of pouring spout 3a, as disclosed in connection with Figures 1—4.

In Figure 6 container 1a is shown in a pouring position where both pouring spout axis HL and center line ML form an angle β with liquid level 4aa, said liquid level here covering the discharge area of liquid AV, whereas area AL in the pouring spout is available to air flowing in through pouring spout 3a and fourther on, through channel portion 5a to flow into the space above liquid level 4aa.

In Figure 7 the same container as in Figure 6 is shown, but liquid level 4aa' is raised to illustrate how the extension 3a' of pouring spout 3 can cause a situation where the liquid in the container covers both liquid discharge area AV and air inflow area AL before the liquid flows across the upper rim 3' of pouring spout 3a'.

Comparing Figures 6 and 7 we find that there is a limit to the increase of height of pouring spout 3a, the pouring conditions being far more advantageous in Figure 6, where a low pouring spout 3a is used, than in Figure 7, where the increased height of pouring spout 3a' has its effect.

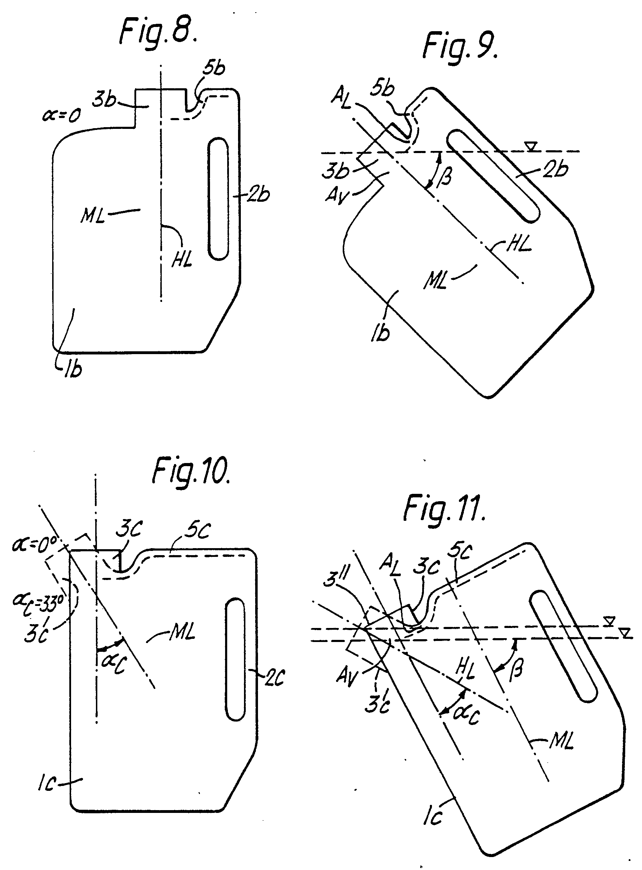

In the embodiment shown in Figures 8 and 9 a variant is disclosed implying that container 1b has a pouring spout 3b positioned still closer to handle 2b. This means that by inclining container 1b according to Figure 9 in an angle B, even though the angle of pouring spout 3b, i.e. angle α is 0 in this case, more advantageous pouring properties than in the case of Figure 6 will be achieved. This is due to the fact that in a structure according to Figure 9 the hazard of damming up liquid when pouring from a filled container will be reduced because pouring spout 3b will result in discharge through discharge area AV without air inflow area AL being coverted by the discharging liquid already at a smaller angle of inclination β of the container. Furthermore, it should be understood, that the closer to the container side of the handle 2b pouring spout 3b is positioned, the higher a pouring spout you can have. Besides, it is still possible to have a pouring spout 3b that is vertical, i.e. having an angle of inclination α equalling 0.

In Figures 10 and 11 a further diagrammatic embodiment of a container 1c is shown. This container shows a pouring spout 3c that is positioned at the opposite face to pouring handle 2c, and pouring spout 3c forms and angle α = 0 with the center line. As an alternative to pouring spout 3c dotted lines show an alternative pouring spout 3c' having an angle of inclination $α_c$ of substantially 33°.

As will appear from Figure 11, with a straight pouring spout 3c the situation might easily occur when, pouring from container 1c, the liquid covers both the discharging area AV of the liquid and the inflow area AL of the air before the liquid overflows upper rim 3'' of pouring spout 3c.

If, however, a pouring spout 3c' forming an angle xc with center line ML or the vertical line respectively is used pouring spout 3c' will permit liquid discharge from the container at a much more acute angle of inclination β of the container without the liquid level covering air inflow are AL. Even with pouring spout 3c' extended upwards there would, within certain limits, still be more advantageous pouring properties than in case of the straight pouring spout 3c shown in full lines in Figures 10 and 11.

It is, in other words, of great importance that angle α of the pouring spout, here selected to be between 0° and 33°, is adapted to the remaining geometric dimensions of container 1a. Also, it is important that the height of pouring spout 3c is adapted to pouring spout angle α and to the filling level and the ratio between air inflow area AL and liquid discharge area AV as well.

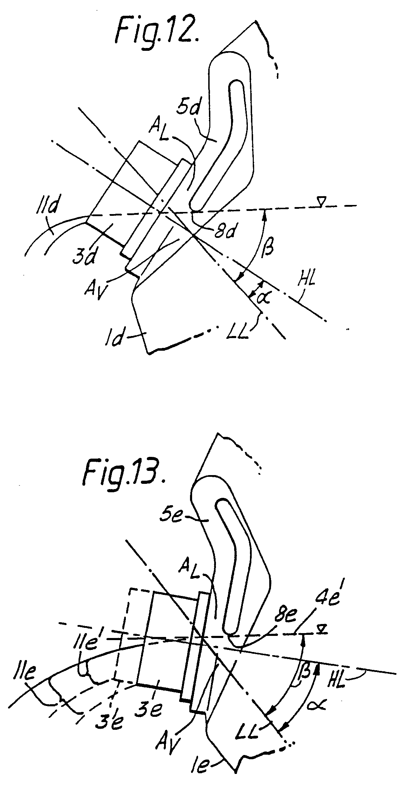

In Figure 12, showing a diagrammatic side elevation like Figure 1, a container 1d is shown having a pouring spout 3d where the free discharge area of liquid AV is made relatively much larger than is the case with container 1 in Figures 1 and 2. Here, rim portion 8d of channel portion 5 forming the area AL of the entering air is decreased correspondingly.

A comparison with the pouring conditions in Figure 4 will show that with the embodiment of Figure 12 it is not necessary to incline container 1d as much as container 1 in Figure 4 in order to achieve discharge of liquid 11d from container 1d. This is due to the fact that liquid discharge area AV is made as large as possible relative to air inflow area AL. It is suitable to make AV as large as possible, especially in connection with liquids having high viscosity or density, so as to facilitate liquid discharge in a pouring situation. It is, however, necessary to ensure that the positioning of pouring spout 3d relative to the pouring direction of the container, i.e. relative to the positioning of the handle, and the height of the pouring spout as well as its angle of inclination α are adapted to the liquid in question in order to achieve an optimal discharge of said liquid.

In Figure 13, showing a side elevation like Figure 12, a container 1e is provided with a pouring spout 3e having a larger spout angle α than that of the embodiment shown in Figure 12, but having a rim portion 8 of the air inflow channel 5e that is not retracted as much as rim portion 8d in the embodiment shown in Figure 12.

The relatively seen, much larger angle α of pouring spout 3e, however, means that container 1e must not be inclined so much in the pouring direction, i.e. vertical line LL needs not have its angle β relative to the liquid level 4e' reduced as much as shown in the embodiment of Figure 12 for achieving a relatively large discharge of liquid 11e from container 1e. A comparison between Figure 12 and 13 shows that the angle of inclination α of pouring spout 3e is of great importance for achieving a non-pulsating discharge of liquid, since in embodiment 13 an earlier discharge of liquid is achieved even though the discharge area of liquid AV is comparatively smaller than that of Figure 12.

In Figure 13 an elongation 3e' of pouring spout 3e is, also, indicated and, as appears from the pouring condition in Figure 13, there will still be a relatively heavy discharge of liquid 11e' over the rim of the prolonged pouring spout 3e' even with a smaller inclination of vertical line LL as compared to Figure 12, and even with a smaller discharge area AV of the liquid in the container.

It should be understood that angle α of the inclination of the pouring spout may be selected within wide limits. In the embodiments disclosed above angles α are shown within the range of 0—33°, but these values may, naturally, be changed in view of other conditions of containers.

In the embodiment shown in Figures 10 and 11 it may, e.g. be considered having pouring spout angles α of 15—90° or more, e.g. up to 135°, however, the filling level of the container and the positioning of the pouring spout must, then, be considered.

**Claims**

1. A container for liquids having a pouring spout (3) and a venting duct (5) extending from the spout to the interior (7) of the container (1), the duct having a lip portion (8) close to the base (4) of the spout opening to reduce the discharge area (AV) of the spout and leave reduced area (AL) of the duct lip open to permit inflow of air through the duct into the container, characterised in that the duct lip portion (8) is perpendicular to the axis (HL) of the spout (3) and is positioned at or below the base (4) of the spout, thereby to permit insertion of a filling nozzle through the spout into the container.

2. A container as claimed in Claim 1, characterised in that the container (1) has one or more ducts (5) integral with the container.

3. A container as claimed in Claim 1 or Claim 2, characterised in that the container (1) has a series of ducts (5) distributed about the spout (3).

4. A container as claimed in Claim 1 or Claim 2, characterised in that the axis (HL) of the spout (3) is inclined at a pouring angle (α) to the vertical axis (LL) of the container and the duct lip (8) terminates generally vertically below the outer rim of the spout, to permit vertical insertion of a nozzle in to the container.

5. A container as claimed in Claim 1 or Claim 2, characterised in that the spout (3) is positioned away from one side of the container (1), the duct (5) leads to the opposed side of the container and the duct lip (8) protrudes beyond the outer rim of the spout, to permit inclined insertion of a nozzle into the container.

6. A container as claimed in any of Claims 1 to 5, characterised in that a handle (2) is formed in one side of the container (1), the spout (3) is positioned between the handle side of the container and past the middle line (ML) of the container and the pouring angle (α) of the spout is between 0° and 135°.

7. A container as claimed in Claim 6, characterised in that the spout (3) is positioned between the middle line (ML) of the container (1) and the side of the container opposed to the handle side (2) and the spout pouring angle (α) is between 0° and 135°.

8. A container as claimed in Claim 7 characterised in that the spout pouring angle (α) is between 0° and 33°.

9. A container as claimed in any of Claims 6 to 8, characterised in that the spout pouring angle (α) is related to the height and positioning of the spout (3) and to the liquid discharge area (AV) of the spout relative to the air inflow area (AL) so that the liquid level (4a) of a fully filled container will not block the duct (5) when the container is first tipped to pour liquid therefrom.

10. A container as claimed in any of Claims 1 to 9, characterised in that the duct (5) is formed by shaping an upper portion (6) of the container beneath the pouring spout (3).

**Patentansprüche**

1. Ein Behälter für Flüssigkeiten mit einem Ausguss (3) und einem von dem Ausguss ins Innere (7) des Behälters (1) verlaufenden Belüftungskanal (5), wobei der Kanal nahe der Basis (4) der Ausgussöffnung einen Lippenteil (8) aufweist, der den Entleerungsbereich (AV) des Ausgusses verkleinert und einen verringerten Bereich (AL) der Kanallippe offenlässt, so dass Luft durch den Kanal in den Behälter einströmen kann, dadurch gekennzeichnet, dass der Lippenteil (8) des Kanals perpendikular zur Achse (HL) des Ausgusses (3) verläuft und sich an oder unterhalb der Basis (4) des Ausgusses befindet, so dass ein Einfüllrohr durch den Ausguss in den Behälter eingeführt werden kann.

2. Behälter nach Anspruch 1, dadurch gekennzeichnet, dass der Behälter (1) einen oder mehrere Kanäle (5) aufweist.

3. Behälter nach Anspruch 1 oder Anspruch 2, dadurch gekennzeichnet, dass der Behälter (1) eine Reihe von um den Ausguss (3) herum verteilten Kanälen (5) aufweist.

4. Behälter nach Anspruch 1 oder Anspruch 2, dadurch gekennzeichnet, dass die Achse (HL) des Ausgusses (3) in einem Giesswinkel (α) zur vertikalen Achse (LL) des Behälters geneigt ist und die Kanallippe (8) im allgemeinen vertikal unterhalb des äusseren Randes des Ausgusses endet, so dass ein Einfüllrohr senkrecht in den Behälter eingeführt werden kann.

5. Behälter nach Anspruch 1 oder Anspruch 2, dadurch gekennzeichnet, dass der Ausguss (3) von einer Seite des Behälters (1) weg angeordnet ist, der Kanal (5) zur entgegengesetzten Seite des Behälters führt und die Kanallippe (8) über den äusseren Rand des Ausgusses hinausragt, so dass ein Einfüllrohr geneigt in den Behälter eingeführt werden kann.

6. Behälter nach einem der Ansprüche 1 bis 5, dadurch gekennzeichnet, dass in eine Seite des Behälters (1) ein Griff (2) eingeformt ist, der Ausguss (3) zwischen der Griffseite des Behälters und jenseits der Mittellinie (ML) des Behälters angeordnet ist und der Giesswinkel (α) des Ausgusses zwischen 0° und 135° beträgt.

7. Behälter nach Anspruch 6, dadurch gekennzeichnet, dass der Ausguss (3) zwischen der Mittellinie (ML) des Behälters (1) und der Seite des Behälters gegenüber der Griffseite (2) angeordnet ist und dass der Giesswinkel des Ausgusses (α) zwischen 0° und 135° beträgt.

8. Behälter nach Anspruch 7, dadurch gekennzeichnet, dass der Giesswinkel des Ausgusses zwischen 0° und 33° beträgt.

9. Behälter nach einem der Ansprüche 6 bis 8, dadurch gekennzeichnet, dass der Giesswinkel (α) des Ausgusses in einem Verhältnis zu Höhe und Lage des Ausgusses (3) sowie zum Flüssigkeitsentleerungsbereich (AV) des Ausgusses in Bezug auf den Lufteinströmungsbereich (AL) steht, so dass der Flüssigkeitspegel (4a) eines vollständig gefüllten Behälters den Kanal (5) nicht blockiert, wenn der Behälter zuerst zum Ausgiessen gekippt wird.

10. Behälter nach einem der Ansprüche 1 bis 9, dadurch gekennzeichnet, dass der Kanal (5) durch Ausformen eines oberen Teils (6) des Behälters unterhalb des Ausgusses (3) gebildet wird.

**Revendications**

1. Conteneur pour liquides possédant un goulot de versement (3) et un canal de prise d'air (5) s'étendant depuis le goulot vers l'intérieur (7) du conteneur (1), le canal ayant une partie de lèvres (8) proche de la base (4) de l'ouverture du goulot pour réduire la zone d'écoulement (AV) du goulot et laisser une zone réduite (AL) des lèvres du canal ouverte pour permettre l'entrée d'air à travers le canal à l'intérieur du conteneur, caractérisé en ce que la partie de lèvre (8) du canal est perpendiculaire à l'axe (HL) du goulot (3) et est placée au niveau ou en-dessous de la base (4) du goulot, de façon à permettre l'introduction d'une buse de remplissage à travers le goulot dans le conteneur.

2. Conteneur selon la revendication 1, caractérisé en ce que le conteneur (1) possède un ou plusieurs canaux (5) venant de matière avec le conteneur.

3. Conteneur selon la revendication 1 ou 2, caractérisé en ce que le conteneur (1) possède plusieurs canaux (5) répartis autour du goulot (3).

4. Conteneur selon la revendication 1 ou 2, caractérisé en ce que l'axe (HL) du goulot (3) est incliné selon un angle de versement (α) par rapport à l'axe vertical (LL) du conteneur et en ce que la lèvre (8) du canal se termine sensiblement verticalement sous le rebord extérieur du goulot, afin de permettre l'introduction verticale d'une buse à l'intérieur du conteneur.

5. Conteneur selon la revendication 1 ou 2, caractérisé en ce que le goulot (3) est disposé à l'écart d'un côté du conteneur (1), en ce que le canal (5) conduit vers le côté opposé du conteneur et en ce que le lèvre (8) du canal fait saillie au-delà du rebord extérieur du goulot pour permettre l'introduction en biais d'une buse dans le conteneur.

6. Conteneur selon l'une quelconque des revendications 1 à 5, caractérisé en ce qu'une poignée (2) est formée dans un des côtés du conteneur (1), en ce que le goulot (3) est placé entre le côté poignée du conteneur et au-delà de la ligne médiane (ML) du conteneur et en ce que l'angle de versement (α) du goulot est compris entre 0° et 135°.

7. Conteneur selon la revendication 6, caractérisé en ce que le goulot (3) est placé entre la ligne médiane (ML) du conteneur (1) et le côté du conteneur opposé au côté poignée (2) et en ce que l'angle de versement du goulot (α) est compris entre 0° et 135°.

8. Conteneur selon la revendication 7, caractérisé en ce que l'angle de versement du goulot (α) est compris entre 0° et 33°.

9. Conteneur selon l'une quelconque des revendications 6 à 8, caractérisé en ce que l'angle d'écoulement du goulot (α) est lié à la hauteur et au positionnement du goulot (3) et à la zone d'écoulement du liquide (AV) du goulot par rapport à la zone d'entrée d'air (AL), de telle sorte que le niveau de liquide (4a) du conteneur complétement rempli ne bloque pas le canal (5) au début du basculement du conteneur pour verser le liquide contenu dans celui-ci.

10. Conteneur selon l'une quelconque des revendications 1 à 9, caractérisé en ce que le canal (5) est réalisé en formant une partie supérieure (6) du conteneur en-dessous du goulot de versement (3).

# Fig.1.

# Fig.2.

Fig.3.

Fig.4.

# Fig.5.

$\alpha = 0$

3a′

5a

3a

ML

2a

la

HL

# Fig.6.

3a′

5a

$A_L$

4aa

2a

3a

$\beta$

$A_V$

HL

ML

la

# Fig.7.

3a′

5a

4aa

$A_L$

3′

3a

$\beta$

$A_V$

2a

HL

ML

la

# Fig.8.

# Fig.9.

# Fig.10.

# Fig.11.

# Fig.12.

# Fig.13.